# EUROPEAN PATENT APPLICATION

(11) **EP 4 503 587 A1**
(43) Date of publication of application: **05.02.2025**
(21) Application number: 22935125.9
(22) Date of filing: 29.03.2022
(51) Int. Cl.: H04N 1/387

(54) **INFORMATION PROCESSING DEVICE, METHOD FOR CONTROLLING INFORMATION PROCESSING DEVICE, AND PROGRAM**

(71) Applicant: Sony Interactive Entertainment Inc., Tokyo 108-0075 (JP)
(72) Inventor: TOKUNAGA, Nodoka, Tokyo 108-0075 (JP); MATSUNAGA, Kiyobumi, Tokyo 108-0075 (JP); FUJIHARA, Masahiro, Tokyo 108-0075 (JP); TAKASE, Masaki, Tokyo 108-0075 (JP)
(74) Representative: D Young & Co LLP
(86) International application number: PCT/JP2022/015399
(87) International publication number: WO 2023/187974

(57) **Abstract**

Disclosed is an information processing apparatus having an image data generation unit that uses a prescribed first resolution setting to generate image data, the information processing apparatus, upon accepting a prescribed operation which is performed by a user and which pertains to recording of the image data, causes the image data generation unit to generate image data by a second resolution setting different from the first resolution setting, and records the generated image data.

## Description

### [Technical Field]

The present invention pertains to an information processing apparatus, a method for controlling an information processing apparatus, and a program.

### [Background Art]

In recent years, in display techniques for, inter alia, a virtual reality (VR) image, reducing load for image processing is addressed by setting the resolution of an image near a direction of a line of sight of a user to be a relatively high resolution and setting a resolution of an image for other portions to a relatively low resolution.

### [Summary]

### [Technical Problem]

However, when there is an attempt to create a recording of a screen that is being displayed using such a technique (an attempt to create what is generally called a screenshot), the viewpoint of a user who refers to a screenshot differs from the viewpoint of a user who is visually recognizing the screen that has been recorded for the screenshot. Therefore, an image having resolutions that differ in portions is visually recognized, and discomfort arises.

The present invention is made in light of the actual circumstances described above, and one object of the present invention is to provide an information processing apparatus, a method for controlling an information processing apparatus, and a program that are for reducing discomfort in an image to be recorded.

### [Solution to Problem]

One aspect of the present invention for solving problems in conventional examples described above is an information processing apparatus including an image data generation unit that uses a prescribed first resolution setting to generate image data, accepting means that accepts a prescribed operation which is performed by a user and which pertains to recording of the image data, and image recording means that, when the prescribed operation is accepted, causes the image data generation unit to generate image data by a second resolution setting different from the first resolution setting and records the generated image data.

### [Advantageous Effect of Invention]

By virtue of the present invention, it is possible to reduce discomfort for an image to be recorded.

### [Brief Description of Drawings]

[FIG. 1]

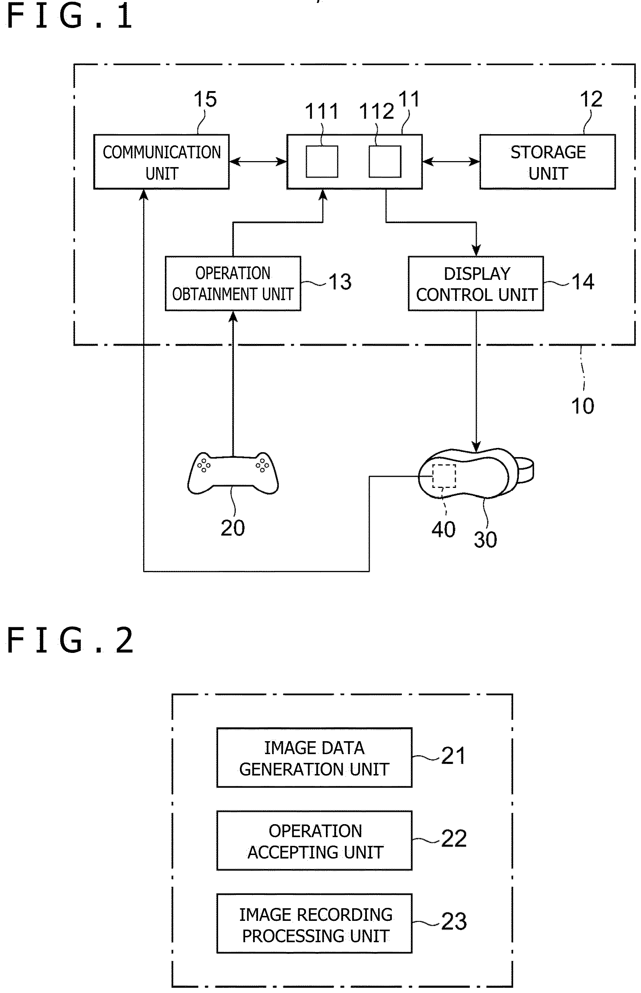

   FIG. 1 is a block view that represents a configuration example for an information processing apparatus according to an embodiment of the present invention.
[FIG. 2]
   FIG. 2 is a functional block diagram that represents an example of the information processing apparatus according to the embodiment of the present invention.
[FIG. 3]

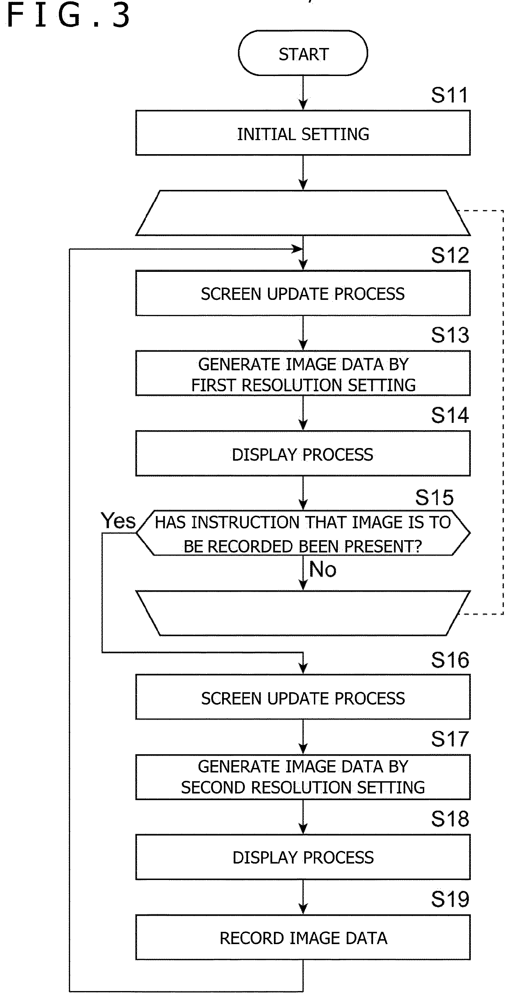

   FIG. 3 is a flow chart that represents an example of an operation by the information processing apparatus according to the embodiment of the present invention.
[FIG. 4]

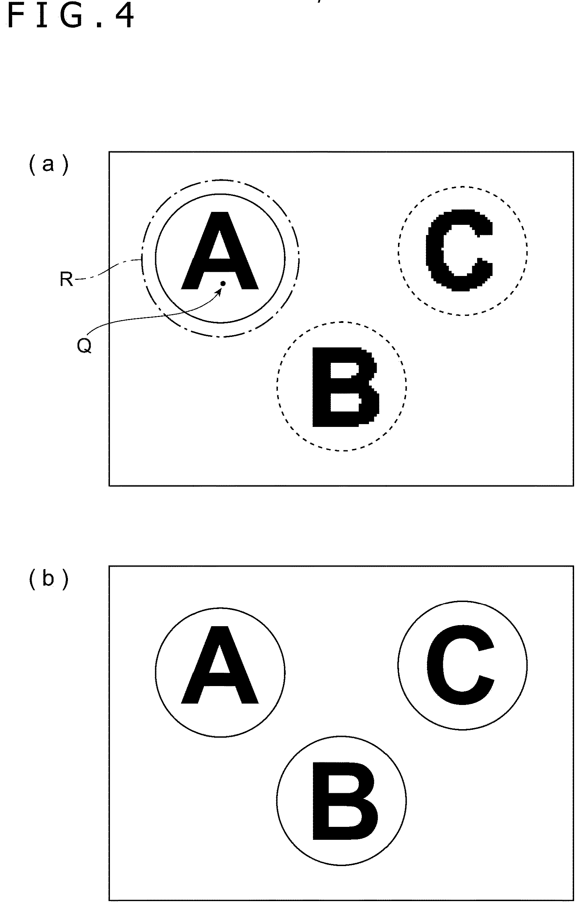

   FIG. 4 depicts explanatory views that represent examples of image data generated by the information processing apparatus according to the embodiment of the present invention.
[FIG. 5]

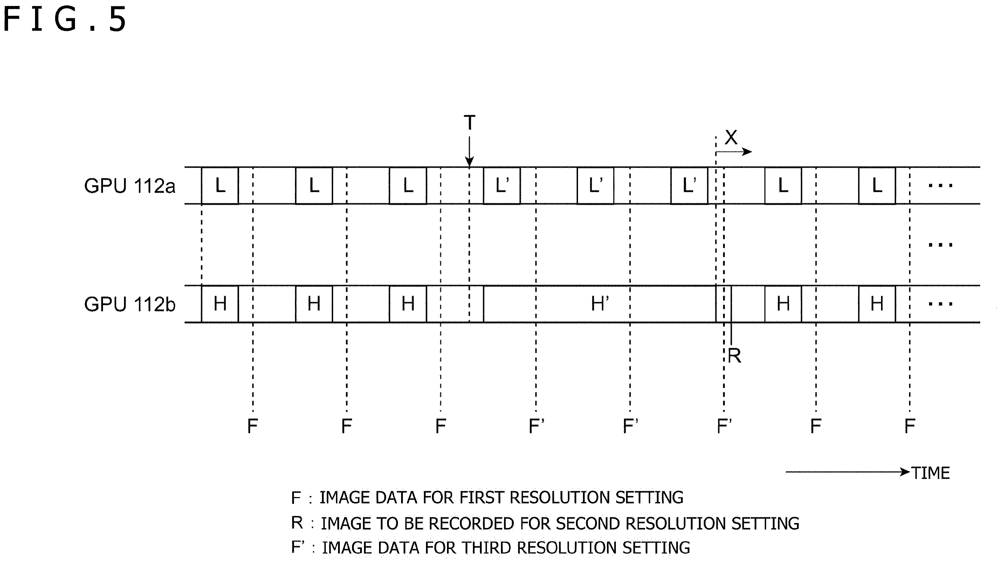

   FIG. 5 is a schematic explanatory view that represents an example of control of a processing resource by the information processing apparatus according to the embodiment of the present invention.

### [Description of Embodiments]

With reference to the drawings, description is given regarding an embodiment of the present invention. An information processing apparatus 10 according to an embodiment of the present invention is, for example, a personal computer, a home game device, or the like, and, as exemplified in FIG. 1, includes a control unit 11, a storage unit 12, an operation obtainment unit 13, a display control unit 14, and a communication unit 15, and is connected to a controller device 20, a display device 30, and a line-of-sight detection device 40.

The control unit 11 is a program control device that includes a central processing unit (CPU), a graphics processing unit (GPU), and the like, and operates in accordance with a program that is stored in the storage unit 12. In the present embodiment, this control unit 11 includes a CPU 111 and a GPU 112. The CPU 111 generates a screen that includes an image that is to be a target of a user operation, performs a display output for the screen, and obtains, from the line-of-sight detection device 40, information representing a position that is on the generated image and that is for the line of sight of the user who looks at the screen including the image and performs an operation.

In addition, the GPU 112 in this control unit 11 functions as an image generation unit that generates image data according to a prescribed first resolution setting. The CPU 111 in this control unit 11, upon accepting a prescribed operation that is performed by a user and that pertains to recording of image data, instructs the GPU 112 to generate image data by a second resolution setting different from the abovementioned first resolution setting and record the generated image data. The GPU 112 receives this instruction, and executes a process for generating image data by a second resolution setting, and records the generated image data. Subsequently, the GPU 112 may continue a process for generating image data by use of the first resolution setting. Description is given later regarding content of detailed processing performed by this control unit 11.

The storage unit 12 includes a storage device such as a disk device or a memory device. This storage unit 12 stores a program that is executed by the control unit 11. Note that this program may be provided after being stored in a computer-readable non-transitory recording medium, and then stored in the storage unit 12. Furthermore, this storage unit 12 also operates as a work memory for the control unit 11.

The operation obtainment unit 13 receives details of an operation performed by a user from the controller device 20, and outputs the details to the control unit 11. The display control unit 14 is connected to the display device 30 and, in accordance with an instruction inputted from the control unit 11, outputs an image for which an instruction has been made, to the display device 30.

The communication unit 15 is a network interface or the like and, in accordance with an instruction inputted from the control unit 11, sends data such as output information to, inter alia, a server apparatus (not illustrated) or another information processing apparatus 10 that is connected via a network. In addition, this communication unit 15 outputs, to the control unit 11, data received via the network from the other information processing apparatus 10, the server apparatus, or the like.

The controller device 20 is a game controller, a mouse, a keyboard, or the like, and outputs information representing an operation performed by a user to the information processing apparatus 10. The display device 30 is, for example, a head mount display (HMD) and, in accordance with an instruction inputted from the information processing apparatus 10, presents an image for which the instruction has been made, to a user.

The line-of-sight detection device 40 detects the direction of the line of sight of a user who visually recognizes an image displayed by the display device 30, and outputs line-of-sight information that represents a result of this detection to the information processing apparatus 10. The format of this line-of-sight information does not matter if this line-of-sight information enables the position of the line of sight of the user to be indicated on an image that the display device 30 is displaying.

In one example of the present embodiment, this line-of-sight detection device 40 is disposed inside an HMD that is the display device 30, and outputs line-of-sight information representing the position of the line of sight of a user onto an image that the HMD presents. For such a line-of-sight detection device, it is possible to use one that is widely known, and thus, detailed description is omitted here.

Next, description is given regarding an operation by the control unit 11 in an embodiment of the present invention. This control unit 11 executes a program stored in the storage unit 12 to thereby realize a configuration that functionally includes an image data generation unit 21, an operation accepting unit 22, and an image recording processing unit 23, as exemplified in FIG. 2.

The image data generation unit 21 is realized by the GPU 112, for example, and generates image data by use of a prescribed resolution setting. In one example of the present embodiment, when the control unit 11 executes an application program (such as a game application), this image data generation unit 21 sets a virtual scene that is obtained by disposing virtual three-dimensional objects, which are to be displayed, within a virtual three-dimensional space in accordance with this instruction. As images that are sequentially captured from virtual cameras disposed within this three-dimensional space, the image data generation unit 21 generates image data (moving image data here) that results from rendering these three-dimensional objects and the like in accordance with a designated resolution setting.

In addition, this image data generation unit 21 disposes these cameras at two mutually different positions and renders left-eye image data and right-eye image data as images that are respectively captured thereby.

The resolution setting designated here, for example, is set to a resolution setting (referred to as a first resolution setting below) for causing generation of image data that includes a region having a relatively high resolution and a region having a relatively low resolution. As an example, when this first resolution setting is designated, the image data generation unit 21, on the basis of user line-of-sight information outputted from the line-of-sight detection device 40, renders a region having a prescribed range centered on the position of the user's line of sight at a relatively high resolution, and renders other regions at a relatively low resolution.

In addition, in accordance with an instruction inputted from the image recording processing unit 23 that is described later, the image data generation unit 21 generates image data by the second resolution setting, which differs from this first resolution setting. This second resolution setting is, for example, for causing generation of image data while employing a uniform resolution for the entirety of the image.

The image data generation unit 21 outputs image data, which is obtained by performing rendering by the first resolution setting, to the display device 30 via the display control unit 14 to thereby display this image data thereon. In addition, this image data generation unit 21 outputs image data obtained by being rendered at a second resolution to the image recording processing unit 23. The image data generation unit 21 may also output image data, which is obtained by performing rendering by the second resolution setting, to the display device 30 via the display control unit 14 to thereby display this image data thereon.

The operation accepting unit 22 accepts, from the operation obtainment unit 13, information that represents an operation performed by a user. This operation accepting unit 22 accepts an operation pertaining to a game application, for example, and provides the operation to a process that is for a game application or the like and is in accordance with the control unit 11.

In addition, upon accepting, from a user, a prescribed operation indicating that image data generated by the image data generation unit 21 should be recorded, this operation accepting unit 22 outputs to the image recording processing unit 23 an instruction indicating that the image data should be recorded.

Upon accepting an instruction indicating that image data should be recorded, the image recording processing unit 23 instructs the image data generation unit 21 to generate image data by the second resolution setting. When the image data generation unit 21 outputs image data rendered by the second resolution setting in accordance with this instruction, the image data is stored in the storage unit 12 as a file, for example.

### (Basic Operation)

The information processing apparatus 10 of the present embodiment basically is provided with the configuration described above, and operates as follows. Here, it is assumed that the information processing apparatus 10 is a home game device, and executes processing for a game application. In addition, the display device 30 connected to this information processing apparatus 10 is assumed to be an HMD, and presents a left-eye image and a right-eye image to a user. Furthermore, the information processing apparatus 10 repeatedly accepts, at each prescribed timing, line-of-sight information that represents the direction of a line of sight, which is for a user who visually recognizes an image displayed by the display device 30 and is sequentially detected by the line-of-sight detection device 40.

As exemplified in FIG. 3, the information processing apparatus 10 performs an initial setting for a virtual scene (S11: initial setting) by making an instruction for information such as the position or orientation of three-dimensional objects such as a virtual character that is to be displayed in a virtual three-dimensional space (a game space), as processing for a game application.

In addition, the information processing apparatus 10 accepts information representing an operation that a user has performed, updates, inter alia, information regarding the position or orientation of a character within this game space, and updates information regarding the position or orientation of a pair of virtual cameras that are disposed at positions respectively corresponding to the left and right eyes of the user (S12: screen update process).

The information processing apparatus 10 uses a preset first resolution setting to generate images that are respectively captured by this pair of cameras (S13). In other words, the information processing apparatus 10 generates pieces of image data (left-eye image data and right-eye image data) that have been rendered as images respectively resulting from viewing the abovementioned three-dimensional objects and the like from this pair of cameras by the first resolution setting. The information processing apparatus 10 outputs the generated pair of images to the display device 30 and causes the display device 30 to display the generated pair of images (S14).

The first resolution setting used by the information processing apparatus 10 here is assumed to be for setting to a relatively high resolution a portion that is from among generated image data and is near a point corresponding to the direction of the user's line of sight obtained on the basis of line-of-sight information inputted from the line-of-sight detection device 40, and setting other portions to a relatively low resolution. In this example, as exemplified in FIG. 4(a), a state is entered in which, for image data generated by the information processing apparatus 10, a portion within a region (R) that is centered on a point Q in the direction of the user's line of sight and goes to a prescribed distance from this point Q is rendered at a relatively high resolution and other portions are rendered at a relatively low resolution.

In addition, the information processing apparatus 10 determines here whether or not the user has performed a prescribed operation (an instruction operation indicating that an image is to be recorded) pertaining to recording of image data (S15). Here, if the prescribed operation has not been performed (S15: No), the information processing apparatus 10 returns to step S12 and continues the process for the game application.

In contrast, if it is determined in step S15 that the user has performed the prescribed operation pertaining to recording of image data (S15: Yes), information representing the operation that the user has performed is accepted, an update is performed for, inter alia, information regarding the position or orientation of a character within this game space, and an update is performed for information regarding the position or orientation of a pair of virtual cameras that are disposed at positions respectively corresponding to the left and right eyes of the user (S16: screen update process).

The information processing apparatus 10 uses a preset second resolution setting to generate images that are respectively captured by this pair of cameras (S17). In other words, the information processing apparatus 10 generates pieces of image data (left-eye image data and right-eye image data) that have been rendered as images resulting from respectively viewing the abovementioned three-dimensional objects and the like from this pair of cameras by the second resolution setting. The information processing apparatus 10 outputs the generated pair of images to the display device 30 and causes display of the pair of images (S18), employs one or both of the pair of images as an image to be recorded and stores the image to be recorded in the storage unit 12 (S19), returns to step S12, and continues processing.

Here, the second resolution setting is for causing the generation of image data while employing a uniform resolution across the entirety of an image. For the image generated in step S17, the entirety of the image is rendered at a relatively high resolution, for example (FIG. 4(b)). Note that the resolution of an image generated by this second resolution setting and the resolution for an image generated by the first resolution setting may have the following relation. In other words, in the following description, when the resolution for a region having a relatively high resolution (referred to as a high-resolution portion) is set to R1H and the resolution for a region having a relatively low resolution (referred to as a low-resolution portion) is set to R1L (R1H > R1L) for the first resolution setting, and the resolution for the second resolution setting is set to R2:
· the resolution R2 for the second resolution setting may be the same as the resolution R1H for a portion that is generated by the relatively high resolution for the first resolution setting (R2 = R1H);
· in addition, the resolution R2 for the second resolution setting may differ from the resolution R1H described above, and the relation R2 > R1H may be satisfied; and
· furthermore, the relation R2 < R1H may be satisfied.

In addition, the resolution R2 for the second resolution setting may be set such that the relation R1L < R2 < R1H is satisfied. In other words, the resolution R2 of an image generated by the second resolution setting may be set to a resolution that is higher than the resolution R1L of a low-resolution portion of an image generated by the first resolution setting.

Note that, in a case where one of left-eye image data and right-eye image data is stored in the storage unit 12 as an image to be recorded in the processing for step S19 described above, the information processing apparatus 10, in processing for step S17, may use the preset second resolution setting to generate one of the left-eye image data and right-eye image data that is stored in the storage unit 12 as an image to be recorded, and use the first resolution setting to generate the other.

By virtue of this example of the present embodiment, it is possible to generate an image to be recorded, such as a screenshot, at a timing that is after a prescribed operation is received from a user, while reducing the load for image generation for, inter alia, a GPU by generating an image for which the resolution is caused to adaptively change in response to the line of sight of a user in a normal state during processing for a game application. When generating this image to be recorded, an image for which the resolution is set to be uniform on the whole is caused to be generated. Therefore, it is possible to reduce discomfort for the image to be recorded. Furthermore, by virtue of this example, it is possible to create an image to be recorded, such as a screenshot, without causing a process for a game application to stop.

### (Another Example of Resolution Setting)

In addition, the second resolution setting may be set to a setting with which an image to be recorded such as a screenshot is generated at a uniform resolution. In this case, when an image to be recorded is a portion of an image that the information processing apparatus 10 generated in the processing for step S17, the information processing apparatus 10 may generate, at the resolution R2, only a portion that is cut out as the image to be recorded in the processing for step S17. In this case, in the processing for step S17, the information processing apparatus 10 may generate a portion not cut out (another portion) as the image to be recorded at a resolution R2' that differs from the resolution R2 (for example, the processing load is reduced if R'2 < R2).

### (Resource Control)

According to processing by the information processing apparatus 10 of the present embodiment, in a case where rendering by the first resolution setting in step S13 in the above-described FIG. 3 and rendering by the second resolution setting in step S17 are caused to be performed by the GPU 112, there are different loads for rendering by the first resolution setting and rendering by the second resolution setting, and thus, there may be cases where processing does not complete for these within the same amount of time.

For example, in a case where rendering by the second resolution setting in step S17 does not complete within the same amount of time as rendering by the first resolution setting the step S13, the information processing apparatus 10 may execute only a screen update process in step S12 and wait for rendering to complete, and execute processing for step S18 and thereafter after the rendering completes. In this case, a screen update rate temporarily decreases, but processing for the game advances.

Furthermore, in a case where the GPU 112 can execute rendering for a plurality of images in parallel, the information processing apparatus 10 may return to step S12 and continue processing without waiting for the rendering by the second resolution setting in step S17 in FIG. 3 to end and, when processing for step S17 has completed, transition to step S19 (skipping processing for step S18 in this case).

In addition, in this case, the information processing apparatus 10 may, during processing for step S17, reduce the execution speed for processing for repeating steps S12 to S15 and decrease the number of times of rendering by the first resolution setting in step S13 to thereby control a time interval for generating image data.

In addition, in a case where it is possible to control a processing resource used in processing for generating image data in the GPU 112 or the like, the information processing apparatus 10 may control the processing resource according to a resolution setting.

For example, in one example of the present embodiment, the control unit 11 may be provided with a plurality of GPUs 112a, 112b, ... and can execute rendering for a plurality of images in parallel. In this example, in processing for rendering by the first resolution setting, as exemplified in FIG. 5, the information processing apparatus 10 periodically generates image data at a relatively low resolution for the entire screen by one GPU 112a (generation time periods are indicated by L in FIG. 5) and image data having a relatively high resolution for within a region that is near a field of view is periodically generated by one other GPU 112b (generation time periods are indicated by H in FIG. 5).

After the end of each generation time period, the information processing apparatus 10 combines the generated image data, generates image data resulting from rendering a region for a prescribed range centered on the position of a user's line of sight at a relatively high resolution and rendering other regions at a relatively low resolution, and displays the image data (F).

When the user eventually performs an operation indicated that an image should be recorded and the information processing apparatus 10 accepts this operation (T), the information processing apparatus 10 starts processing for rendering by the second resolution setting, generates image data having a relatively high resolution for the entire screen by the GPU 112b (H'), and continues processing for periodically generating image data at the relatively low resolution for the entire screen by the GPU 112a (L'), and generates image data at a third rendering setting (a setting by which the entire screen is set to a relatively low resolution) that differs from both of the first and second rendering settings.

Note that, for the purpose of the description here, illustration is performed by assuming that generation of image data having a relatively high resolution for the entire screen requires a time period in which image data having a relatively low resolution for the entire screen is generated three times. In other words, during this time, the information processing apparatus 10 is generating image data by the second and third resolution settings in parallel. In this example, after a time period for generating image data at low resolutions (image data by the third resolution setting), image data resulting from rendering the entirety of the screen at the relatively low resolution is displayed (F'). In addition, when generation of image data that is for the entire screen and has the relatively high resolution (image data by the second resolution setting) completes, the information processing apparatus 10 records this image data to the storage unit 12 (R), and subsequently returns to processing for rendering by the first resolution setting to thereby continue processing (X).

By virtue of this processing example, it is possible to generate image data to be recorded that has reduced discomfort while controlling a usage aspect for the GPU 112, which is a processing resource used in processing for generating image data, maintaining a frame rate for image data that is to be displayed, and maintaining progress for an application program.

### (Example of Considering Arrangement of Objects)

In addition, in the description thus far, image data generated at the same resolution for the entire screen by the second resolution setting (pan focus image data) is generated as a screenshot as image data having little discomfort, but the present embodiment is not limited to this.

For example, the image data generation unit 21 in the control unit 11 according to the present embodiment may select, when generating image data by the second resolution setting in accordance with an instruction inputted from the image recording processing unit 23, some virtual three-dimensional objects that are disposed within a virtual three-dimensional space as objects of interest and may render, when rendering, regions for the objects of interest at the relatively high resolution and render other regions at the relatively low resolution.

An object of interest may be a virtual object that is present in a region that includes the position of the line of sight of a user or, from among an image to be rendered, an object that is to be rendered with an area larger than a prescribed threshold may be selected as an object of interest.

In yet another example, when generating image data by the second resolution setting in accordance with an instruction inputted from the image recording processing unit 23, the image data generation unit 21 in the control unit 11 may render the entirety of an image by a relatively high resolution, and subsequently apply a blurring process (such as a Gaussian blur) to a region other than an object of interest.

In this manner, when the second resolution setting is for employing image data in which a region that includes an object of interest selected by a prescribed method is set to a resolution that differs from a resolution for other regions, for example, image data in which a character being viewed by a user is displayed as standing out against the background is generated as an image to be recorded such as a screenshot, and it becomes possible to subject a region of interest to staging that stands out.

In addition, a region for an object of interest is set to a relatively high resolution (or set to not be subject to a blurring process), but, in the present embodiment, an image for within a region resulting from outwardly expanding the region for the object of interest by only a prescribed number of pixels (subjected to dilation processing) may be rendered at the relatively high resolution, and other regions may be rendered at the relatively low resolution.

The number of pixels for the expansion here may be set in accordance with the area of the object to, inter alia, 1.1 times the square root of the area, for example, or may be set in accordance with an instruction that a user has made in advance.

In addition, in a case such as where a blurring process or the like is performed, image data may be generated, as if the resolution thereof were gradually changed, by, inter alia, reducing an amount of blurring closer to the region for the object of interest or a region resulting from expanding this region.

### (Variation)

In addition, in a certain example of the present embodiment, the information processing apparatus 10 may perform recording after combining image data to be recorded with, as an image of a character string, information pertaining to the position of an object, information regarding a parameter being used in processing for an application program such as a game application, information that represents the state of a controller operation performed by a user, for example, or a number of bullets remaining, a stamina value, or other pieces of information that correspond to a parameter for a character in a game, or may record such information as additional information that is added to the image data.

In addition, the present disclosure may include the following aspects.

### (Item 1)

An information processing apparatus including:
one or more processors, in which
the one or more processors function as an image data generation unit that uses a prescribed first resolution setting to generate image data,
the information processing apparatus accepting a prescribed operation which is performed by a user and which pertains to recording of the image data, and,
when the prescribed operation is accepted, controlling the image data generation unit to generate image data by a second resolution setting different from the first resolution setting and records the generated image data.

### (Item 2)

The information processing apparatus according to Item 1, in which
the first resolution setting is a setting for causing generation of image data that includes a region having a relatively high resolution and a region having a relatively low resolution, and the second resolution setting is a setting for causing generation of image data at a uniform resolution.

### (Item 3)

The information processing apparatus according to Item 1, in which,
at a timing after the prescribed operation by the user is received, the information processing apparatus controls the image data generation unit to generate image data by the second resolution setting, and records the generated image data.

### (Item 4)

The information processing apparatus according to Item 3, further controlling a processing resource used in processing for generating image data when functioning as the image data generation unit, and
at a timing after the prescribed operation by the user is received, causing the resource control means to change processing resource control to thereby increase the processing resource, controlling the image data generation unit to generate image data by the second resolution setting, and recording the generated image data, in which
the second resolution setting is a setting for causing generation of image data at a uniform resolution that is higher than at least the resolution of the region having the lowest resolution that is included in image data generated in accordance with the first resolution setting.

### (Item 5)

The information processing apparatus according to Item 1, in which
the one or more processors function as the image data generation unit to sequentially generate image data,
the information processing apparatus, upon receiving the prescribed operation by the user, sequentially generating image by a third resolution setting different from the first and second resolution settings, and generating image data by the second resolution setting to be performed in parallel.

### (Item 6)

The information processing apparatus according to Item 1, in which
the one or more processors function as the image data generation unit to sequentially generate image data,
the information processing apparatus controlling a time interval for generating image data while image data is caused to be generated at the second resolution.

### (Item 7)

The information processing apparatus according to Item 1, in which
the image data includes at least one or more objects, and the second resolution setting is a setting for setting an object selected by a prescribed method from among these objects as an object of interest, and achieving image data having resolutions that differ between a region that includes the object of interest and another region.

### (Item 8)

A method for controlling an information processing apparatus, using the information processing apparatus that has one or more processors which generate image data in accordance with a prescribed first resolution setting, the method including:
accepting a prescribed operation which is performed by a user and which pertains to recording of the image data; and,
when the prescribed operation is accepted, generating image data by a second resolution setting different from the first resolution setting and recording the generated image data.

### (Item 9)

A computer-readable non-transitory recording medium which stores a program for causing a computer to execute:
a process of using a prescribed first resolution setting to generate image data;
a process of, when the prescribed operation which is performed by a user and which pertains to recording of the image data is accepted, generating image data by a second resolution setting different from the first resolution setting and recording the generated image data.

### [Reference Signs List]

10: Information processing apparatus
11: Control unit
12: Storage unit
13: Operation obtainment unit
14: Display control unit
15: Communication unit
20: Controller device
21: Image data generation unit
22: Operation accepting unit
23: Image recording processing unit
30: Display device
40: Line-of-sight detection device
111: CPU
112: GPU.

## Claims

1. An information processing apparatus comprising:
an image data generation unit that uses a prescribed first resolution setting to generate image data;
accepting means that accepts a prescribed operation which is performed by a user and which pertains to recording of the image data; and
image recording means that, when the prescribed operation is accepted, causes the image data generation unit to generate image data by a second resolution setting different from the first resolution setting and records the generated image data.

2. The information processing apparatus according to claim 1,
wherein
the first resolution setting is a setting for causing generation of image data that includes a region having a relatively high resolution and a region having a relatively low resolution, and the second resolution setting is a setting for causing generation of image data at a uniform resolution.

3. The information processing apparatus according to claim 1 or 2, wherein,
at a timing after the prescribed operation by the user is received, the image recording means causes the image data generation unit to generate image data by the second resolution setting, and records the generated image data.

4. The information processing apparatus according to claim 3, further comprising:
resource control means that controls a processing resource used in processing for generating image data in the image data generation unit, wherein,
at a timing after the prescribed operation by the user is received, the image recording means causes the resource control means to change processing resource control to thereby increase the processing resource, causes the image data generation unit to generate image data by the second resolution setting, and records the generated image data, and
the second resolution setting is a setting for causing generation of image data at a uniform resolution that is higher than at least the resolution of the region having the lowest resolution that is included in image data generated in accordance with the first resolution setting.

5. The information processing apparatus according to any one of claims 1 to 4, wherein
the image data generation unit sequentially generates image data, and
the image recording means, upon receiving the prescribed operation by the user, causes image data to be sequentially generated by a third resolution setting different from the first and second resolution settings, and causes generation of image data by the second resolution setting to be performed in parallel.

6. The information processing apparatus according to any one of claims 1 to 5, wherein
the image data generation unit sequentially generates image data, and
the image recording means controls a time interval for generating image data while image data is caused to be generated at the second resolution.

7. The information processing apparatus according to claim 1,
wherein
the image data includes at least one or more objects, and
the second resolution setting is a setting for setting an object selected by a prescribed method from among these objects as an object of interest, and achieving image data having resolutions that differ between a region that includes the object of interest and another region.

8. A method for controlling an information processing apparatus, wherein,
using the information processing apparatus that has an image data generation unit which generates image data in accordance with a prescribed first resolution setting,
accepting means accepts a prescribed operation which is performed by a user and which pertains to recording of the image data, and
image recording means, when the prescribed operation is accepted, causes the image data generation unit to generate image data by a second resolution setting different from the first resolution setting and records the generated image data.

9. A program for causing a computer to function as:
image data generation means that uses a prescribed first resolution setting to generate image data;
accepting means that accepts a prescribed operation which is performed by a user and which pertains to recording of the image data; and
image recording means that, when the prescribed operation is accepted, causes the image data generation means to generate image data by a second resolution setting different from the first resolution setting and records the generated image data.
